# EUROPÄISCHE PATENTSCHRIFT

(11) **EP 3 701 780 B1**
(45) Veröffentlichungstag und Bekanntmachung des Hinweises auf die Patenterteilung: **29.09.2021**
(21) Anmeldenummer: 20401003.7
(22) Anmeldetag: 22.01.2020
(51) Int. Cl.: A01C 7/08, A01C 7/20, A01C 15/00, A01B 73/04

(54) **SÄMASCHINENSYSTEM**
SOWING MACHINE SYSTEM
SYSTÈME DE SEMOIR

(30) Priorität: 28.02.2019 DE 102019105051
(43) Veröffentlichungstag der Anmeldung: 02.09.2020
(73) Patentinhaber: Amazonen-Werke H. Dreyer SE & Co. KG, 49205 Hasbergen (DE)
(72) Erfinder: Goretzko, Robert, 28309 Bremen (DE); Hollmann, Torsten, 26180 Rastede (DE)

(56) Entgegenhaltungen:
- EP-A1- 0 201 048
- EP-A1- 3 314 999
- DE-A1- 10 220 278
- DE-C2- 4 138 486
- FR-A1- 2 880 513

## Beschreibung

Die Erfindung betrifft ein Sämaschinensystem gemäß dem Oberbegriff des Patentanspruches 1.

Ein derartiges Sämaschinensystem ist in DE 102 20 278 A1 offenbart.

Insbesondere als Einzelkornsämaschinen ausgeführte Sämaschinen bzw. Saatgutverteileinrichtungen weisen einen Grundrahmen auf, der einerseits der Anordnung der Sämaschine an einem Ackerschlepper dienen kann und andererseits zumindest ein Verteilaggregat trägt. Hierzu umfasst der Grundrahmen einen zentralen Anbaubock und eine sich an den Anbaubock anschließende in Arbeitsstellung quer zur Fahrtrichtung erstreckende Tragbalkenanordnung. Ferner sind an der Tragbalkenanordnung Bodenbearbeitungswerkzeuge befestigt zur Einarbeitung von Saatgut in den Boden. Der so gebildete Grundrahmen solcher Sämaschinen wird bisher entweder für den Einsatz mit oder ohne eine(r) zusätzliche(n) Verteilvorrichtung für granulares Material, wie Dünger und/oder Saatgut, ausgelegt und konstruiert. Für den Einsatz mit einer Verteilvorrichtung wird der Grundrahmen bisher vorzugsweise in Fahrtrichtung ausladend und insgesamt stabil ausgeführt. Nachteilig ist hierbei, dass somit eine Variantenvielfalt der Sämaschine, insbesondere des Grundrahmens dieser, entsteht, was eine kosteneffiziente Herstellung und Montage erschwert. Zudem bedingt schon die massive Auslegung des Grundrahmens, dass die Maschine weniger leichtzügig zu betreiben ist.

Ferner ist es bekannt, solche Sämaschinen über einen an dem Anbaubock anschließbaren Verlängerungsrahmen an dem Ackerschlepper anzuordnen, um zusätzliche Spurlockerer zwischen Sämaschine und Zugmaschine anzuordnen. Ein weiteres Sämaschinensystem ist in EP 0 093 193 B1 beschrieben. Dieses Sämaschinensystem umfasst die Saatgutverteileinrichtung und den Verlängerungsrahmen, so dass die Saatgutverteileinrichtung wahlweise über ihren Anbaubock oder den Verlängerungsrahmen an der Heckhydraulik des Ackerschleppers angekuppelt werden kann. Hierzu weist der Anbaubock einen ersten Satz von Anordnungspunkten, vorzugsweise eine Dreipunktaufhängung, auf. Der Verlängerungsrahmen ist an dem ersten Satz von Anordnungspunkten anordbar und weist seinerseits einen zweiten Satz von Anordnungspunkten zur Anordnung in der Heckhydraulik des Ackerschleppers auf. Nachteilig ist hierbei, dass das Sämaschinensystem durch den Verlängerungsrahmen in Fahrtrichtung nach hinten zuweilen sehr ausladend baut, wenn bspw. eine Saatgutverteileinrichtung mit einer zusätzlichen Verteilvorrichtung für granulares Material eingesetzt wird. Ein solches Sämaschinensystem wird so dann weit hinter dem Ackerschlepper getragen, was eine ungünstige Schwerpunktlage bedingt und einen starken Ackerschlepper und/oder eine zusätzliche Frontballastierung erfordert.

Weitere Sämaschinensysteme sind offenbart in EP 3 314 999 A1, FR 2 880 513 A1, DE 41 38 486 C2 und EP 0 201 048 A1.

Die der Erfindung zugrunde liegende Aufgabe besteht darin, ein einfaches Sämaschinensystem mit einer vielseitig einsetzbaren Saatgutverteileinrichtung zu schaffen.

Diese Aufgabe wird erfindungsgemäß durch ein Sämaschinensystem mit den Merkmalen des Anspruch 1 gelöst. Es ist vorgesehen, dass der Verlängerungsrahmen eine auf dem Verlängerungsrahmen aufgesattelte Verteilvorrichtung für granulares Material, insbesondere Dünger und/oder Saatgut, trägt, welche im am Anbaubock angeschlossenen Zustand des Verlängerungsrahmens schüttgutleitend mit den Bodenbearbeitungswerkzeugen der Saatgutverteileinrichtung verbunden ist.

Die Erfindung macht sich die Erkenntnis zunutze, dass der Verlängerungsrahmen Bauraum zur Anordnung einer Verteilvorrichtung bietet, so dass diese nur bei Bedarf gemeinsam mit der Saatgutverteileinrichtung einsetzbar ist und das Sämaschinensystem wesentlich kürzer baut. Vorteilhaft ist hierbei, dass der Grundrahmen der Saatgutverteileinrichtung nicht für den Einsatz mit der Verteilvorrichtung angepasst ausgebildet ist, sondern sich viel mehr ein modulares Sämaschinensystem ergibt. Der Grundrahmen der Saatgutverteileinrichtung ist folglich für den Einsatz mit und ohne eine(r) zusätzliche(n) Verteilvorrichtung gleichermaßen eingerichtet. Die Variantenvielfalt der Sämaschine, insbesondere des Grundrahmens dieser, ist folglich durch diese Weiterbildung des Verlängerungsrahmens in einfacher Weise reduziert, so dass eine kosteneffiziente Herstellung und Montage ermöglicht ist. Die Saatgutverteileinrichtung ist wahlweise direkt an einen Ackerschlepper angekuppelbar und so separat von der Verteilvorrichtung betreibbar oder über den Verlängerungsrahmen an den Ackerschlepper ankuppelbar, so dass die Saatgutverteileinrichtung und die Verteilvorrichtung für granulares Material gemeinsam betreibbar sind. In unerwarteter Weise ergibt sich so ferner der synergetische Effekt, dass zur Verteilung des von der Verteilvorrichtung abgegebenen granularen Materials die Bodenbearbeitungswerkzeuge der Saatgutverteileinrichtung nutzbar sind.

Ferner vorteilhaft ist, dass schon der Grundrahmen besonders kurzbauend ausgeführt werden kann und somit nur so lang ist, wie zur Ausbringung von Saatgut über die Verteilaggregate benötigt. Der Grundrahmen ist außerdem besonders leichtzügig gestaltet, da die Verteilvorrichtung von dem Verlängerungsrahmen getragen wird. Das modulare Sämaschinensystem zeichnet sich folglich durch einen verringerten Zugkraftbedarf aus: die Saatgutverteileinrichtung kann ohne den Verlängerungsrahmen nah am Ackerschlepper getragen werden; die Verteilvorrichtung wird im am Anbaubock angeschlossenen Zustand ebenso nah am Ackerschlepper getragen, wobei die Saatgutverteileinrichtung in Fahrtrichtung nahezu direkt dahinter angeordnet ist. Der Schwerpunkt des Sämaschinensystems liegt in beiden Fällen nah hinter dem Ackerschlepper, so dass dieser weniger stark belastet wird.

Es ist ferner vorgesehen, dass die Verteilvorrichtung einen quer zur Fahrtrichtung lang gestreckten Vorratsbehälter umfasst, wobei der Vorratsbehälter zumindest ein Dosierorgan zur Abgabe von granularem Material an die Bodenbearbeitungswerkzeuge in geregelten Mengen aufweist. Die quer zur Fahrtrichtung lang gestreckte Form des Vorratsbehälters ermöglicht eine weiter optimierte Schwerpunktlage des Sämaschinensystems nah am Ackerschlepper. Der Vorratsbehälter kann somit in Fahrtrichtung wenig ausladend gestaltet sein. Der synergetische Effekt aus der Kombination von Verteilvorrichtung und den Bodenbearbeitungswerkzeugen der Saatgutverteileinrichtung ist durch das zumindest eine Dosierorgan in vorteilhafter Weise verstärkt. Das Dosierorgan ermöglicht eine optimale Einarbeitung des granularen Materials in den Boden mittels der Bodenbearbeitungswerkzeuge indem im Betrieb die geeignete, vom Nutzer gewünschte Menge an Material abgegeben wird.

In einer weiteren vorteilhaften Weiterbildung des Sämaschinensystems ist die Tragbalkenordnung gebildet durch zwei, vorzugsweise in Fahrtrichtung achssymmetrische, Klappbalken, wobei die Klappbalken aus der sich quer zur Fahrrichtung erstreckenden Arbeitsposition in eine gegenüber dem Anbaubock, vorzugsweise um zumindest annährend 90 Grad, geklappte Transportposition verbringbar sind. In Arbeitsposition kann infolge dieser Maßnahme eine Arbeitsbreite größer der im Straßenverkehr zulässigen Gesamtbreite erreicht werden. In Transportposition hingegen können geltende Straßenverkehrsordnungen in einfacher Weise durch Hochklappen der Klappbalken eingehalten werden. Eine besonders vorteilhafte Klappung wird erreicht durch Verbringen der Klappbalken um zumindest annährend 90 Grad in eine zumindest annährend aufrechte Position. Die Haltekräfte zum Halten der Klappbalken sind somit in einfacher Weise reduziert. Infolge dieser Maßnahme erreicht das Sämaschinensystem auch in Transportposition eine günstige Schwerpunktlage nah hinter dem Ackerschlepper, da die die Klappbalken zumindest annährend nur in vertikaler Richtung geklappt werden.

Das Sämaschinensystem ist ferner vorteilhaft dadurch weitergebildet, dass an der Tragbalkenanordnung eine Mehrzahl von quer zur Fahrtrichtung, vorzugsweise äquidistant, angeordneten als Säaggregate ausgeführten Verteilaggregaten zur vereinzelten Ablage von Saatgut auf einer landwirtschaftlichen Nutzfläche befestigt sind. Für die vereinzelte Ablage von Saatgut kann es besonders förderlich sein in einer einzigen Überfahrt parallel Dünger mit abzulegen, um die Bedingungen für das abgelegte Saatgut zu begünstigen. Infolge dieser Weiterbildung kann in dem am Anbaubock angeschlossenen Zustand des Verlängerungsrahmens entsprechendes granulares Material mittels der Verteilvorrichtung parallel zum Saatgut abgelegt werden. Die Verteilvorrichtung kann pro an der Tragbalkenanordnung angeordnetem Säaggregat zumindest ein Dosierorgan aufweisen, so dass eine einfache Zuordnung von granularem Material zu vereinzelt abgelegtem Saatgut geschaffen ist. Ferner können die Säaggregate zusätzliche Bodenbearbeitungswerkzeuge, sogenannte Düngerschare, zur Einarbeitung von granularem Material aufweisen, wobei diese schüttgutleitend mit der Verteilvorrichtung verbindbar sind. Es ist ebenso denkbar, die Saatgutverteileinrichtung mit der Mehrzahl von als Säaggregaten ausgeführten Verteilaggregaten über den Anbaubock direkt an einem Ackerschlepper angeordnet und ohne die Verteilvorrichtung eingesetzt wird. Das Sämaschinensystem ist folglich modular aufgebaut und besonders vielseitig einsetzbar.

Eine besonders zweckmäßige Zuladung von granularem Material wird bei diesem Sämaschinensystem dadurch erreicht, dass die Verteilvorrichtung eine, vorzugsweise als Schneckenförderer ausgeführte, Beladehilfe umfasst, welche dazu eingerichtet ist, granulares Material der Verteilvorrichtung, vorzugsweise dem Vorratsbehälter der Verteilvorrichtung, zuzuführen, wobei die Beladehilfe sich über die Saatgutverteileinrichtung nach hinten erstreckt. Die Beladehilfe ist somit besonders einfach von hinter dem Sämaschinensystem erreichbar und kann schnell und sicher befüllt werden. Die die Saatgutverteileinrichtung nach hinten zumindest teilweise übergreifende Bauweise der Beladehilfe ist der symmetrischen Verteilung von Lasten zuträglich. Die Beladehilfe kann quer zur Fahrtrichtung zumindest annährend mittig angeordnet sein.

Weitere Einzelheiten der Erfindung sind der Beispielsbeschreibung und den Zeichnungen zu entnehmen. Die Zeichnungen zeigen
- Fig.1: eine hinter einem Ackerschlepper angehangene, als Einzelkornsämaschine ausgeführte Saatgutverteileinrichtung in Arbeitsposition und in perspektivischer Ansicht,
- Fig.2: die Einzelkornsämaschine mit Ackerschlepper in Transportposition und in Seitenansicht,
- Fig.3: die Einzelkornsämaschine mit einem Verlängerungsrahmen, einer als Heckdüngervorrichtung ausgeführten Verteilvorrichtung und dem Ackerschlepper in Explosionsansicht,
- Fig.4: die Einzelkornsämaschine mit Heckdüngervorrichtung in Arbeitsposition und in perspektivischer Ansicht, und
- Fig.5: die Einzelkornsämaschine mit Heckdüngervorrichtung in Transportposition und in Seitenansicht.

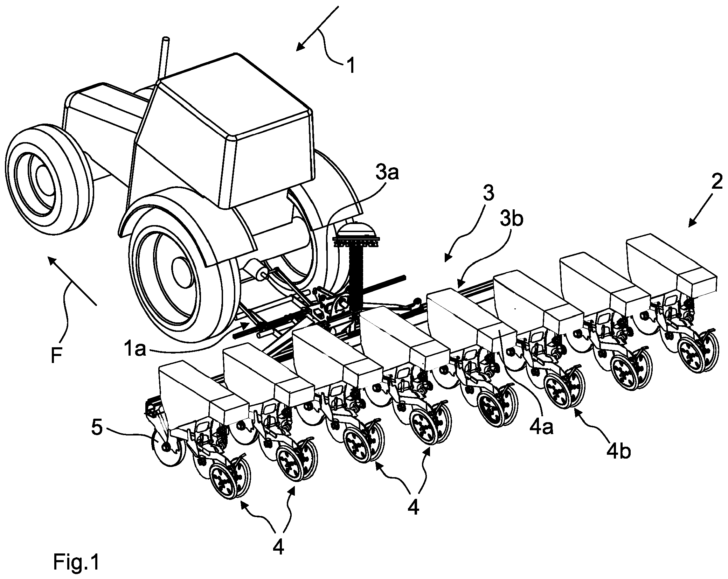

Eine hinter einem Ackerschlepper 1 angehangene, als Einzelkornsämaschine 2 ausgeführte Saatgutverteileinrichtung ist in Fig.1 zu sehen. Die Einzelkornsämaschine 2 weist einen Grundrahmen 3 auf, welcher gebildet ist durch einen zentralen Anbaubock 3a und eine sich in der gezeigten Arbeitsposition quer zur Fahrtrichtung F erstreckende Tragbalkenanordnung 3b. An der Tragbalkenanordnung 3b sind mehrere als Säaggregate 4 ausgeführte Verteilaggregate und den Säaggregaten 4 vorlaufende, als Düngerschare 5 ausgeführte Bodenbearbeitungswerkzeuge befestigt. Die Säaggregate 4 sind quer zur Fahrtrichtung F zumindest annährend äquidistant nebeneinander an der Tragbalkenanordnung 3b angeordnet und zur vereinzelten Abgabe von Saatgut auf einer landwirtschaftlichen Nutzfläche eingerichtet. Hierzu umfassen die Säaggregate 4 einen Saatguttank 4a von dem das zu vereinzelnde Saatgut in eine verdeckte Vereinzelungseinrichtung rieselt. Die Vereinzelungseinrichtung gibt das Saatgut in an sich bekannter Weise in regelmäßigen Abständen an ebenfalls an dem Säaggregat 4 befestigte Säschare 4b ab, so dass dieses im Boden eingearbeitet wird.

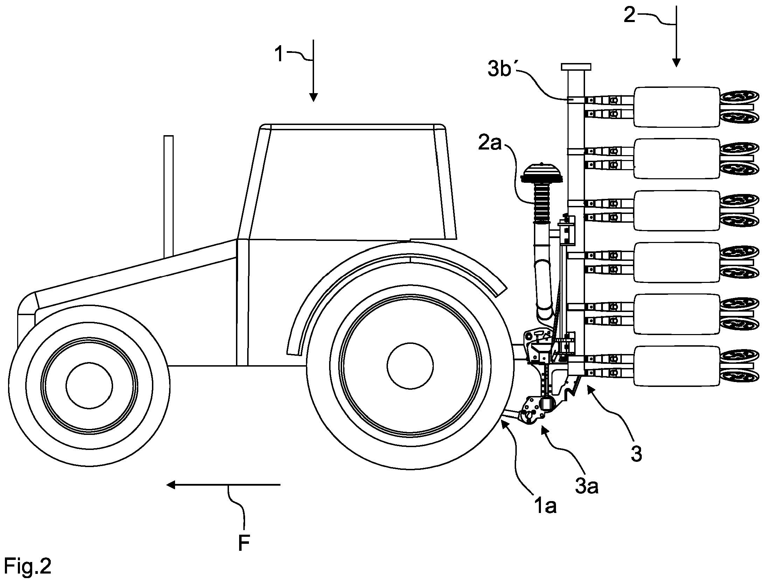

Die Einzelkornsämaschine 2 ist über den Anbaubock 3a an der als Dreipunkthydraulik 1a ausgeführten Heckhydraulik der Ackerschleppers 1 angekuppelt. Der Anbaubock 3a weist hierzu einen ersten, zu der Dreipunkthydraulik 1a korrespondierenden Satz 6a von Anordnungspunkten auf. In einer nicht dargestellten Ausführungsform kann die Heckhydraulik des Ackerschleppers 1 andersartig ausgeführt sein, wobei der erste Satz 6a von Anordnungspunkten des Anbaubocks 3a dieser andersartigen Heckhydraulik angepasst ausgebildet ist. Die Tragbalkenanordnung 3b ist ferner gebildet durch zwei Klappbalken 3b', welche in Fahrtrichtung F achssymmetrisch sind. Die Klappbalken 3b' sind aus der sich quer zur Fahrtrichtung F erstreckenden Arbeitsposition, gemäß Fig.1, in eine gegenüber dem Anbaubock 3a um circa 90 Grad aufwärts geklappte Transportposition verbringbar, wie Fig.2 zeigt. In dieser Transportposition ist die Einzelkornsämaschine 2 in der Dreipunkthydraulik 1a des Ackerschleppers 1 getragen und sicher über öffentliche Verkehrswege verbringbar. Die Einzelkornsämaschine 2 kann eine als Verteilerturm 2a ausgeführte Verteilvorrichtung für granulares Material umfassen, um die Einzelkornsämaschine 2 in einer nicht gezeigten Ausführungsform mit einem mit dem Verteilerturm 2a schüttgutleitend verbundenen Frontbehälter für granulares Material zu betreiben.

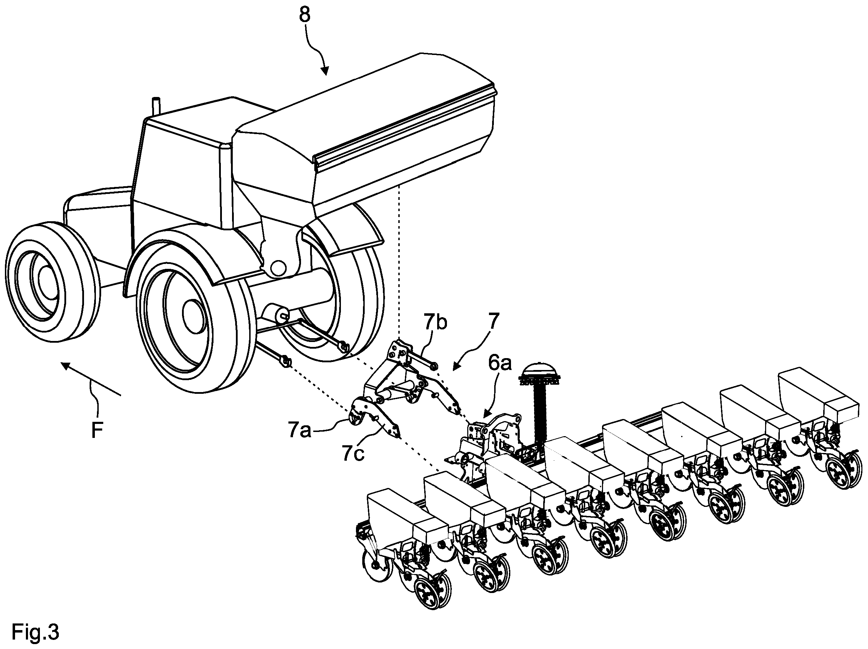

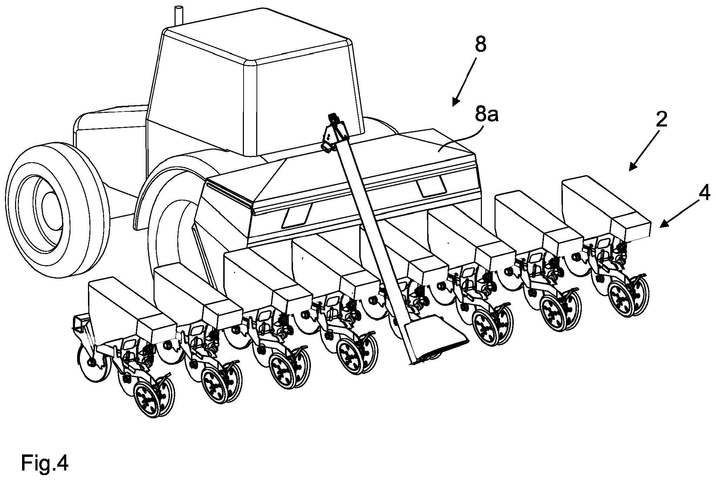

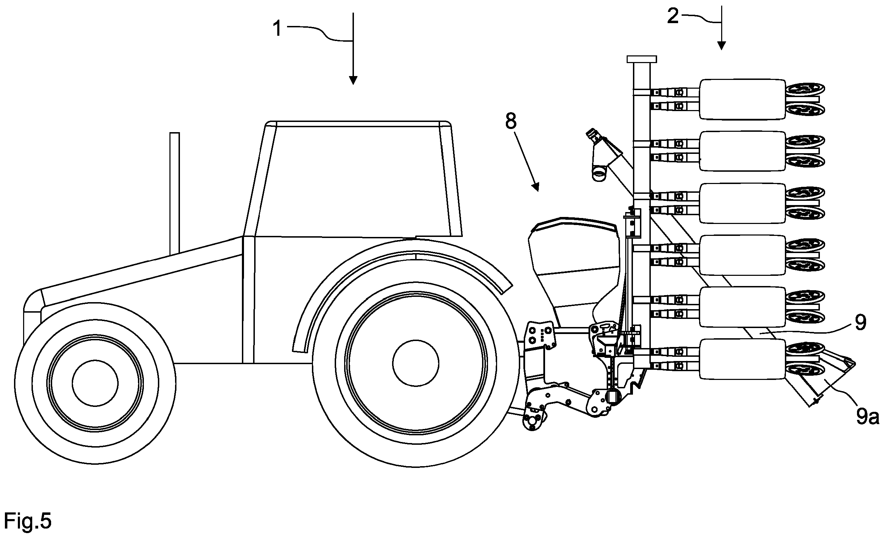

Die Einzelkornsämaschine 2 ist Teil eines Sämaschinensystems, welches neben der Einzelkornsämaschine 2 einen an dem Anbaubock 3a anschließbaren Verlängerungsrahmen 7 umfasst, der in Fig.3 gezeigt ist. Der Verlängerungsrahmen 7 ist über sein in Fahrtrichtung F hinteres Ende an dem ersten Satz 6a von Anordnungspunkten des Anbaubocks 3a anbaubar und weist seinerseits einen zweiten Satz 7a zur Dreipunkthydraulik 1a korrespondierender Anordnungspunkte auf. Hierzu umfasst der Verlängerungsrahmen 7 eine Oberlenkerstrebe 7b, welche die Verbindung vom oberen Anordnungspunkt des Anbaubocks 3a zum oberen Anbindungspunkt des Verlängerungsrahmens 7 herstellt, und zwei starre Unterlenkerstreben 7c, welche die Verbindung von den beiden unteren Anordnungspunkten des Anbaubocks 3a zu den unteren Anbindungspunkten des Verlängerungsrahmens bilden. Die Oberlenkerstrebe 7b ist beidseitig, also am Verlängerungsrahmen 7 und am Anbaubock 3a, lösbar mittels Bolzenverbindungen mit eingeschobenem Sicherungsschaft festgelegt. Die Unterlenkerstreben 7c sind an jeder Seite lösbar mittels drei Schrauben festgelegt, so dass sie dazu eingerichtet sind die Hubkräfte der Dreipunkthydraulik 1a zu übertragen. Die Einzelkornsämaschine 2 ist bei diesem Sämaschinensystem folglich wahlweise direkt über den Anbaubock 3a an dem Ackerschlepper 1 angekuppelt, wie in Fig.1 und 2 gezeigt, oder über den am Anbaubock 3a befestigten Verlängerungsrahmen 7 am Ackerschlepper 1 angebaut, wie in Fig. 4 und 5 gezeigt.

Der Verlängerungsrahmen 7 ist mit einer zusätzlichen als Heckdüngervorrichtung 8 ausgeführten Verteilvorrichtung für granulares Material, hier Dünger, ausgestattet. Es ist ebenfalls denkbar, dass die Heckdüngervorrichtung 8 mit Saatgut gefüllt ist, um weiteres Saatgut auszubringen. Die Heckdüngervorrichtung 8 ist auf dem Verlängerungsrahmen 7 aufgesattelt und wird von diesem so getragen. Um im Betrieb des Sämaschinensystems neben dem von den Säaggregaten 4 abgegebenen Saatgut parallel Dünger mit auszubringen, ist die Heckdüngervorrichtung 8 im am Anbaubock 3a angeschlossenen Zustand des Verlängerungsrahmens 7 schüttgutleitend über nicht näher dargestellte Ausbringleitungen mit den Düngerscharen 5 der Einzelkornsämaschine 2 verbunden. Das Sämaschinensystem ist folglich modular aufgebaut: Um ausschließlich Saatgut auf einer landwirtschaftlichen Nutzfläche auszubringen, kann die Einzelkornsämaschine 2 direkt über den Anbaubock 3a ihres Grundrahmens 3 an dem Ackerschlepper 1 angebaut und so gemeinsam über die Nutzfläche verbracht werden. Falls in einer einzigen Überfahrt Dünger neben dem Saatgut abgelegt werden soll, kann die Einzelkornsämaschine 2 mit dem Verlängerungsrahmen 7 gekoppelt werden. D.h. ohne wesentliche Änderungen an der Einzelkornsämaschine 2 vorzunehmen, ist es über die auf dem Verlängerungsrahmen 7 aufgesattelte Heckdüngervorrichtung 8 möglich, parallel Dünger an den Düngerscharen 5 zur Förderung des Saatgutes abzulegen.

Die Heckdüngervorrichtung 8 umfasst hierzu einen quer zur Fahrtrichtung F lang gestreckten Vorratsbehälter 8a, in dem der Dünger bevorratet wird. Der Vorratsbehälter 8a ist zumindest an seinem unteren Ende annährend trichterförmig ausgestaltet und weist je Säaggregat 4 ein nicht näher gezeigtes Dosierorgan zur Abgabe des Düngers an die Düngerschare 5 auf. Die Dosierorgane sind im trichterförmigen Bereich des Vorratsbehälter 8a angeordnet, so dass der Dünger stetig nachrieselt und zur Abgabe bereitsteht. Die Dosierorgane arbeiten vorzugsweise in an sich bekannter Weise volumetrisch und entnehmen Dünger in geregelten Mengen aus dem Vorratsbehälter 8a und geben dieses an die Düngerschare 5 ab. Die nicht dargestellten Ausbringleitungen können pneumatisch beaufschlagt sein, so dass der Dünger auch aktiv zu den Säaggregaten 4 bzw. den denen vorlaufenden Düngerscharen 5 befördert wird. Die Einzelkornsämaschine 2 kann sowohl hierzu, als auch zur Beaufschlagung der den Säaggregaten 4 zugeordneten Vereinzelungseinrichtungen, ein Gebläse aufweisen. Das Sämaschinensystem zusammengesetzt aus der Einzelkornsämaschine 2 und der auf dem Verlängerungsrahmen 7 aufgesattelten Heckdüngervorrichtung 8 ist in Fig.4 in Arbeitsposition zu sehen.

Das Gespann aus Heckdüngervorrichtung 8 und Einzelkornsämaschine 2 ist in Fig.5 in Transportposition gezeigt. Die Heckdüngervorrichtung 8 umfasst eine als Schneckenförderer 9 ausgeführte Beladehilfe. Der Schneckenförderer 9 erstreckt sich von dem Vorratsbehälter 8a über die Einzelkornsämaschine 2 zwischen den heraufgeklappten Klappbalken 3b' und den daran befestigten Säaggregaten 4 nach hinten und umfasst an diesem Ende einen Befülltrichter 9a. Dem Vorratsbehälter 8a lässt sich somit über den Schneckenförderer 9 besonders einfach Material zuführen, indem dieses in den Befülltrichter 9a eingeleitet wird. Von dem Befülltrichter 9a gelangt das zu beladende Material in den Schneckenförderer 9 und wird in den Vorratsbehälter 8a gefördert.

### Bezugszeichenliste

- 1: Ackerschlepper
- 1a: Dreipunkthydraulik
- 2: Einzelkornsämaschine
- 2a: Verteilerturm
- 3: Grundrahmen
- 3a: Anbaubock
- 3b: Tragbalkenanordnung
- 3b': Klappbalken
- F: Fahrtrichtung
- 4: Säaggregat
- 4a: Saatguttank
- 4b: Säschar
- 5: Düngerschar
- 6a: erster Satz (von Anordnungspunkten)
- 7: Verlängerungsrahmen
- 7a: zweiter Satz (von Anordnungspunkten)
- 7b: Oberlenkerstrebe
- 7c: Unterlenkerstrebe
- 8: Heckdüngervorrichtung
- 8a: Vorratsbehälter
- 9: Schneckenförderer
- 9a: Befülltrichter

## Patentansprüche

1. Sämaschinensystem, umfassend eine Saatgutverteileinrichtung (2), insbesondere Einzelkornsämaschine (2), mit einem Grundrahmen (3), welcher gebildet ist durch einen zentralen Anbaubock (3a) und eine sich zumindest in Arbeitsposition quer zur Fahrtrichtung (F) erstreckende Tragbalkenanordnung (3b), die der Befestigung von Bodenbearbeitungswerkzeugen (5) und zumindest einem Verteilaggregat (4) dient, und einen an dem Anbaubock (3a) anschließbaren Verlängerungsrahmen (7), wobei die Saatgutverteileinrichtung (2) wahlweise über den Anbaubock (3a) oder den Verlängerungsrahmen (7) an der Dreipunkthydraulik ausgeführten Heckhydraulik (1a) eines Ackerschleppers (1) ankuppelbar ist, wobe der Anbaubock (3a) hierzu einen ersten Satz (6a) von Anordnungspunkten aufweist und der Verlängerungsrahmen (7) an dem ersten Satz (6a) von Anordnungspunkten anordbar ist und seinerseits einen zweiten Satz (7a) Anordnungspunkte aufweist, wobei der Verlängerungsrahmen (7) eine auf dem Verlängerungsrahmen (7) aufgesattelte, einen Vorratsbehälter (8a) umfassende Verteilvorrichtung (8) für granulares Material, insbesondere Dünger und/oder Saatgut, trägt, welche im am Anbaubock (3a) angeschlossenen Zustand des Verlängerungsrahmens (7) schüttgutleitend mit den Bodenbearbeitungswerkzeugen (5) der Saatgutverteileinrichtung (2) verbunden ist, wobei der Vorratsbehälter (8a) zumindest ein Dosierorgan zur Abgabe von granularem Material an die Bodenbearbeitungswerkzeuge (5) in geregelten Mengen aufweist, **dadurch gekennzeichnet, dass** der Vorratsbehälter (8a) quer zur Fahrtrichtung (F) lang gestreckt ist, und dass der Verlängerungsrahmen (7), mittels des zweiten Satz (7a) von Anordnungspunkten an der Heckhydraulik (1a) angekuppelt, tragend ausgeführt ist.

2. Sämaschinensystem nach Anspruch 1, **dadurch gekennzeichnet, dass** die Tragbalkenordnung (3b) gebildet ist durch zwei, vorzugsweise in Fahrtrichtung (F) achssymmetrische, Klappbalken (3b'), dass die Klappbalken (3b') aus der sich quer zur Fahrrichtung (F) erstreckenden Arbeitsposition in eine gegenüber dem Anbaubock (3a), vorzugsweise um zumindest annährend 90 Grad, geklappte Transportposition verbringbar sind.

3. Sämaschinensystem nach zumindest einem der vorstehenden Ansprüche, **dadurch gekennzeichnet, dass** an der Tragbalkenanordnung (3b) eine Mehrzahl von quer zur Fahrtrichtung (F), vorzugsweise äquidistant, angeordneten als Säaggregate (4) ausgeführten Verteilaggregaten (4) zur vereinzelten Ablage von Saatgut auf einer landwirtschaftlichen Nutzfläche befestigt sind.

4. Sämaschinensystem nach zumindest einem der vorstehenden Ansprüche, **dadurch gekennzeichnet, dass** die Verteilvorrichtung (8) eine, vorzugsweise als Schneckenförderer (9) ausgeführte, Beladehilfe (9) umfasst, welche dazu eingerichtet ist, granulares Material der Verteilvorrichtung (8), vorzugsweise dem Vorratsbehälter (8a) der Verteilvorrichtung (8), zuzuführen, dass die Beladehilfe (9) sich über die Saatgutverteileinrichtung (2) nach hinten erstreckt.

## Claims

1. Seeder system, comprising a seed-distributing device (2), in particular single-grain seeder (2), having a basic frame (3) which is formed by a central headstock (3a) and a supporting bar arrangement (3b) which, at least in the working position, extends transversely with respect to the direction of travel (F) and serves for the fastening of soil cultivation tools (5) and at least one distribution unit (4), and by an extension frame (7) which is connectable to the headstock (3a), wherein the seed-distributing device (2) can be coupled either via the headstock (3a) or the extension frame (7) to the rear hydraulics (1a), designed as three-point hydraulics, of a tractor (1), wherein the headstock (3a) for this purpose has a first set (6a) of arrangement points and the extension frame (7) can be arranged on the first set (6a) of arrangement points and, for its part, has a second set (7a) of arrangement points, wherein the extension frame (7) bears a distribution apparatus (8) for granular material, in particular fertilizer and/or seed, the distribution apparatus being mounted on the extension frame (7) and comprising a storage container (8a) and, in the state of the extension frame (7) connected to the headstock (3a), being connected to the soil cultivation tools (5) of the seed-distributing device (2) in the manner conducting bulk materials, wherein the storage container (8a) has at least one metering member for dispensing granular material in regulated quantities to the soil cultivation tools (5), **characterized in that** the storage container (8a) is elongated transversely with respect to the direction of travel (F), and **in that** the extension frame (7), coupled to the rear hydraulics (1a) by means of the second set (7a) of arrangement points, is designed to be load-bearing.

2. Seeder system according to Claim 1, **characterized in that** the supporting bar arrangement (3b) is formed by two folding bars (3b'), which are preferably axially symmetrical in the direction of travel (F), and **in that** the folding bars (3b') can be brought from the working position, which extends transversely with respect to the direction of travel (F), into a transport position which is folded in relation to the headstock (3a), preferably by at least approximately 90 degrees.

3. Seeder system according to at least either of the preceding claims, **characterized in that** a plurality of distribution units (4) for the singulated depositing of seed on an agricultural useful area are fastened to the supporting bar arrangement (3b), said distribution units being arranged, preferably equidistantly, transversely with respect to the direction of travel (F) and being designed as sowing units (4).

4. Seeder system according to at least one of the preceding claims, **characterized in that** the distribution device (8) comprises a loading aid (9) which is preferably designed as a worm conveyor (9) and is configured to supply granular material to the distribution apparatus (8), preferably to the storage container (8a) of the distribution apparatus (8), and **in that** the loading aid (9) extends rearwards via the seed-distributing device (2).

## Revendications

1. Système de semoir, comprenant un dispositif de répartition de semences (2), en particulier semoir monograine (2), doté d'un cadre de base (3) qui est formé par une tête d'attelage centrale (3a) et un agencement de poutres de support (3b) s'étendant transversalement au sens de la marche (F), au moins dans la position de travail, et qui sert à fixer des outils destinés à travailler le sol (5) et au moins un groupe de répartition (4), et par un cadre rallonge (7) pouvant être connecté à la tête d'attelage (3a), le dispositif de répartition de semences (2) pouvant au choix être accouplé par l'intermédiaire de la tête d'attelage (3a) ou du cadre rallonge (7) au mécanisme hydraulique arrière (la), réalisé sous la forme d'un mécanisme hydraulique trois points, d'un tracteur agricole (1), la tête d'attelage (3a) présentant à cet effet un premier jeu (6a) de points de disposition, et le cadre rallonge (7) pouvant être disposé au niveau du premier jeu (6a) de points de disposition et présentant à son tour un deuxième jeu (7a) de points de disposition, le cadre rallonge (7) portant un dispositif de répartition (8), semi-porté sur le cadre rallonge (7), comprenant un réservoir (8a) pour matière granulaire, en particulier pour engrais et/ou semences et qui est relié en guidage de matière en vrac aux outils destinés à travailler le sol (5) du dispositif de répartition de semences (2) à l'état où le cadre rallonge (7) est connecté à la tête d'attelage, le réservoir (8a) présentant au moins un élément de dosage pour distribuer de la matière granulaire aux outils destinés à travailler le sol (5) en quantités contrôlées,
**caractérisé en ce que** le réservoir (8a) est allongé transversalement au sens de la marche (F), et **en ce que** le cadre rallonge (7) est réalisé de manière portante, en étant accouplé au système hydraulique arrière (1a) au moyen du deuxième jeu (7a) de points de disposition.

2. Système de semoir selon la revendication 1, **caractérisé en ce que** l'agencement de poutres de support (3b) est formé par deux poutres rabattables (3b'), symétriques à l'axe de préférence dans le sens de la marche (F), **en ce que** les poutres rabattables (3b') peuvent être amenées de la position de travail s'étendant transversalement au sens de la marche (F) à une position de transport rabattue par rapport à la tête d'attelage (3a), de préférence d'au moins approximativement 90 degrés.

3. Système de semoir selon au moins l'une des revendications précédentes, **caractérisé en ce que** sur l'agencement de poutres de support (3b), une pluralité de groupes de répartition (4) disposés transversalement au sens de la marche (F), de préférence de manière équidistante, réalisés sous forme de groupes de semoir (4), est fixée pour déposer séparément des semences sur une surface utile agricole.

4. Système de semoir selon au moins l'une des revendications précédentes, **caractérisé en ce que** le dispositif de répartition (8) comprend un dispositif d'aide au chargement (9), de préférence sous forme de convoyeur à vis (9), qui est aménagé pour amener de la matière granulaire au dispositif de répartition (8), de préférence au réservoir (8a) du dispositif de répartition (8), **en ce que** le dispositif d'aide au chargement (9) s'étend vers l'arrière en passant par le dispositif de répartition de semences (2).
